# EUROPEAN PATENT SPECIFICATION

(11) **EP 2 766 522 B1**
(45) Date of publication and mention of the grant of the patent: **13.07.2016**
(21) Application number: 12766683.2
(22) Date of filing: 02.10.2012
(51) Int. Cl.: D07B 5/00, D07B 1/16, B66B 7/06

(54) **A LOAD BEARING ASSEMBLY COMPRISING A STEEL ROPE AND A JACKET**
TRAGMITTEL BEINHALTEND EIN STAHLSEIL UND EINEN MANTEL
ÉLÉMENT PORTEUR AVEC UN CÂBLE D'ACIER ET UNE GAINE

(30) Priority: 13.10.2011 EP 11184984
(43) Date of publication of application: 20.08.2014
(73) Proprietor: Bekaert Advanced Cords Aalter NV, 9880 Aalter (BE)
(72) Inventor: GALLENS, Jeroen, B-9340 Lede (BE); CLAUWS, Raf, B-8792 Desselgem (BE); KLUST, Andreas, B-3001 Heverlee (BE)
(74) Representative: Heyde, Katrien
(86) International application number: PCT/EP2012/069457
(87) International publication number: WO 2013/053621

(56) References cited:
- WO-A1-2010/019149
- WO-A1-2010/072690
- WO-A1-2011/148469
- JP-A- 11 247 078
- JP-A- 2009 234 791
- US-A1- 2009 120 731

## Description

### Technical Field

The invention relates to a load bearing assembly for use in elevator systems. More particularly, the invention relates to a load bearing assembly comprising at least one steel rope comprising steel filaments. The at least one steel rope is surrounded by a jacket having a matrix of a thermoplastic elastomer with dispersed in this matrix small polymer particles having a high molecular weight.

### Background Art

Elevator systems typically comprise a car and a counterweight that move within a hoist way. A load bearing assembly typically moves over a number of sheaves and supports the load of the cab and the counterweight. Typical load bearing assemblies comprise belts or ropes.

The diameter of the sheaves has a large influence on the lifetime of the load bearing assembly. Conventionally, sheave diameters D of at least 40 times the diameter of the load baring assembly d have been used to prevent premature failures.
On the other hand, elevator systems with smaller diameter sheaves require less space and enable the use of lower cost motors.

To reduce the sheave diameter two approaches are possible.
Firstly, the ratio between the sheave diameter D and the diameter of the load bearing assembly d (ratio D/d) can be kept at reasonably high levels by reducing the diameter of the load bearing assembly. By reducing the diameter of the load bearing assembly the breaking load will be reduced. This means that in order to meet the safety factor requirements the required number of load bearing assemblies should be increased. Secondly, a lower D/d ratio can be obtained by developing new load bearing assemblies having improved resilience to high bending stresses.

The use of elastomeric coated steel ropes as elevator rope is well known in the art. Thermoplastic polyurethane (TPU) is commonly used as elastomeric coating. During use the elastomeric coating material undergoes large deformations which may result in cracks, particularly when the use of small diameter sheaves causes frequent high bending stresses in the coating material.

It is important that the coefficient of friction between the load bearing assembly and the other components such as the sheaves has a desired level.
Some friction is desired to achieve sufficient traction between the load bearing assembly and the other components such as the sheaves. However, excessive friction can lead to undesirable consequences when the counterweight gets stuck during elevator operation.

WO 2010/019149 describes a load bearing assembly having a polymer coating (for example TPU) and at least one friction stabilizer to control the desired friction characteristics.
JP 2009234791 discloses a rope comprising a tensile body bearing tension applied in a longitudinal direction and the resin coat protecting the tensile body from wear damage, wherein the resin coat has insoluble solid additive particles mixed in resin base material.

### Disclosure of Invention

It is an object of the present invention to provide a load bearing assembly for use in an elevator system avoiding the drawbacks of the prior art.
It is another object of the present invention to provide a load bearing assembly having a coefficient of friction allowing sufficient traction between the load bearing assembly and the other components such as the sheaves, thereby avoiding excessive friction.
It is a further object of the present invention to provide a load bearing assembly provided with a jacket having an adjustable coefficient of friction.

According to a first aspect of the present invention a load bearing assembly for use in an elevator system is provided. The load bearing assembly comprises
- at least one steel rope,
- a jacket at least partially surrounding said at least one steel rope. The jacket comprises at least one layer of a thermoplastic elastomer. The layer of a thermoplastic elastomer comprises polymer particles having a high molecular weight.

The polymer particles are preferably dispersed in the layer of thermoplastic elastomer.
The polymer particles can be homogeneously dispersed over the whole layer of thermoplastic elastomer or can be dispersed over a preferred range of the layer of thermoplastic elastomer, for example dispersed close to the outer surface of the layer of thermoplastic elastomer or dispersed at the outer surface of the layer of thermoplastic elastomer.

In a preferred embodiment the jacket consists of a thermoplastic elastomer matrix having polymer particles dispersed in at least part of said matrix. The polymer particles can be dispersed over the whole matrix of the thermoplastic elastomer. Alternatively, the polymer particles can be dispersed over a preferred range of the matrix, for example close to the outer surface of the layer of thermoplastic elastomer or at the outer surface of the layer of thermoplastic elastomer.

Preferably, the thickness of the jacket is between 0.01 and 2.0 mm at every point of the jacket. The jacket can follow the outer shape of the bare rope or ropes, or it can have a rounder shape, such as a slightly rounder shape.
The thickness of the jacket at a certain point is understood as the shortest distance in a plane perpendicular to the load bearing assembly between the point at the outer surface of the jacket and the closest metallic point.

### THERMOPLASTIC ELASTOMER

As thermoplastic elastomer in principle any thermoplastic elastomer material can be chosen. Non delimiting examples of thermoplastic elastomers comprise styrenic block copolymers, polyether-ester block copolymers, thermoplastic polyolefin elastomers, thermoplastic polyurethanes and polyether polyamide block copolymers.
It is clear that the thermoplastic material will be chosen to suit the needs of the particular situation.

In a preferred embodiment, the jacket comprises thermoplastic polyurethane (TPU). Examples of thermoplastic polyurethanes comprise ether-based polyurethanes, ester-based polyurethanes, ester-ether based polyurethanes carbonate-based polyurethane or any combination thereof. Preferred polyurethanes are polyurethanes having a good hydrolysis resistance and a low temperature flexibility such as ether-based polyurethanes.

The thermoplastic elastomer can be applied by any technique known in the art, for example by injection moulding, powder coating and extrusion. Preferably, the thermoplastic elastomer is applied by extrusion.

### POLYMER PARTICLES

The polymer particles are preferably particles having a molecular weight higher than 0.5*10⁶ g/mol. More preferably, the polymer particles have a molecular weight ranging between 1*10⁶ g/mol and 15*10⁶ g/mol, for example ranging between 1*10⁶ g/mol and 10*10⁶ g/mol, as for example 2*10⁶ g/mol, 5*10⁶ g/mol or 9*10⁶ g/mol.
The high molecular weight gives the particles a high viscosity compared to the surrounding thermoplastic elastomer matrix. The result is that the particles stay intact during the coating process.

As polymer particles any polymer particles having a molecular weight higher than 0.5*10⁶ g/mol can be considered.
Preferred polymer particles comprise polyethylene particles, more particularly ultra-high molecular weight polyethylene (UHMW-PE) particles. Other possible polymer particles comprise siloxane particles, such as ultra-high molecular weight polydimethylsiloxanes particles.

The polymer particles may have any shape, such as spherical shape or a non-spherical shape, for example an irregular shape.

The polymer particles have preferably a particle size ranging between 5 and 500 µm. More preferably, the polymer particles have a particle size ranging between 20 and 250 µm or between 50 and 100 µm.

In case the polymer particles are spherical particles, the particle size corresponds with the diameter of the particles.
In case the polymer particles are non-spherical, the particle size corresponds with the diameter of the sphere that has the same volume as the particle that is considered.

The polymer particles are preferably added in a concentration ranging between 1 and 20 wt%. More preferably, the polymer particles are added in a concentration between 2 and 10 wt%, such as in a concentration of 2 wt%, 3 wt% or 5 wt%.

In addition to the polymer particles other additives may be added to the thermoplastic material. These additives may include catalysts, wetting agents, coloring agents, cross-linking agents, oxides, stabilizers, defoaming agents, surfactants, antioxidants, softening agents, plasticizers, fillers and flame retardants.

### STEEL ROPES

The load bearing assembly may comprise one steel rope. Alternatively, the load bearing assembly may comprise a plurality of steel ropes.
In case the load bearing assembly comprises a plurality of steel ropes the number of steel ropes of a load bearing assembly ranges preferably between 2 and 20 and comprises for example 8, 10 or 12 ropes.
In case the load bearing assembly comprises a plurality of steel ropes, the steel ropes are preferably aligned parallel to the longitudinal axis of the load bearing assembly.

A steel rope comprises a number of strands twisted together. In preferred embodiments a steel rope comprises one or more core strands and a number of outer strands twisted around the core strand(s).

A "strand" is defined as a plurality of steel filaments that have first been stranded together by at least one stranding and/or bunching operation. A "filament" is defined as an elongated element or wire.
The strands are assembled to a rope in a closing step. The rope assembled in this way has a bare (i.e. uncoated) rope diameter.
The "bare rope diameter" is defined as the diameter of the smallest imaginary circle that circumscribes the transversal cross section of the bare rope.

The number of filaments in a strand is preferably higher than 3, for example between 3 and 19, for example 7 or 19. The filaments can be assembled according to any arrangement known in the art, e.g. according cross lay, according Warrington parallel lay, according Seale parallel lay, or any combination of cross and/or parallel lay. It is clear for a person skilled in the art that in order to achieve these configurations, different filament diameters have to be used.

In case the rope comprises core strand(s) and outer strands the core strand(s) can be of the same arrangement as the outer strands or the core strand(s) can be of a different arrangement.

Preferably, neighboring outer strands do not touch each other. This can for example be realized by choosing the diameter of the core strand(s) and/or by choosing the diameters of the filaments in the core strand(s). Preferably, the gap between the outer strands is at least 0.010 times the bare rope diameter. More preferably, the gap between the outer strands is larger than 0.020 times the bare rope diameter or even larger than 0.025 times the bare rope diameter. The gap is to be considered in the direction perpendicular to the strand. Note that the gap increases with longer lay lengths. Using larger lay lengths is thus favorable to increase gaps. The gap between outer strands allows the flow of thermoplastic elastomer in between the strands. In this way the voids between the strands can be filled to a certain 'filling degree'. The 'filling degree' can be defined as follows:
- when taking a cross section of the bare rope perpendicular to the rope, a certain area within the outer circumscribed circle (with diameter D) will not be occupied by steel and will be void. Let us call this area 'A_{void}'.
- when taking a cross section of the coated rope perpendicular to the rope, a certain area of the voids within the circumscribed circle will now be occupied by a thermoplastic elastomer. An area we call 'Aₑₗₐₛₜₒₘₑᵣ'.

The filling degree can now conveniently be expressed as the ratio of Aₑₗₐₛₜₒₘₑᵣ to A_{void} in percent. According the invention, a filling degree of 15% is preferred, although a filling degree above 30% is more desirable.

The filaments used preferably comprise filaments made of steel such as high carbon steel or stainless steel.

In a preferred embodiment, the filaments, either the core filament as the peripheral filaments are made from plain carbon steel. Such a steel generally comprises a minimum carbon content of 0.40wt% C (for example at least 0.70 wt% C or at least 0.80wt% C) with a maximum of 1.1 wt% C, a manganese content ranging from 0.10 to 0.90 wt% Mn, the sulphur and phosphorus contents are each preferably kept below 0.030 wt%. Additional micro-alloying elements such a chromium (up to 0.20 to 0.4 wt%), boron, cobalt, nickel, vanadium may also be added.

In an alternative embodiment, the filaments are made from stainless steel. Stainless steels contain a minimum of 12wt% Cr and a substantial amount of nickel. More preferred stainless steel composition comprise are austenitic stainless steels. The most preferred compositions are known in the art as AISI (American Iron and Steel Institute) 302, AISI 301, AISI 304 and AISI 316.

The steel filaments preferably have a tensile strength higher than 1500 N/mm². More preferably, the tensile strength of the steel filaments is higher than 1700 N/mm² or even higher than 2400 N/mm² for example 3000 N/mm².

The higher the tensile strength, the smaller the steel filament can be for the same breaking load, or the smaller the strand(s), the smaller the rope or the smaller the load bearing assembly can be.

The filaments have a diameter preferably ranging between 0.04 mm and 1.20 mm depending on the application. The different filaments of a cord may have the same diameter although this is not necessary.

The steel rope and/or the filaments and/or the strands can be uncoated or they can be coated with a suitable coating. Preferred coatings are for example zinc or zinc alloy coatings such as zinc coatings, brass coatings, zinc aluminum coatings or zinc aluminum magnesium coatings.

To promote the adhesion between the steel and the jacket optionally an adhesion promoting agent can be applied on the steel rope and/or on the filaments and/or on the strands. Any adhesion promoting agent known in the art can be considered.

### APPLICATIONS

A load bearing assembly according to the present invention is in particular suitable to be used in elevator systems, such as traction elevator systems. A load bearing assembly according to the present invention is also suitable to be used in hoisting systems, such as hoisting systems in cranes and mine shafts.

According to a second aspect of the present invention a method of manufacturing a load bearing assembly is provided. The method comprises the steps of
- providing at least one steel rope;
- applying a jacket of a thermoplastic elastomer around said at least one steel rope, said thermoplastic elastomer comprising polymer particles having a molecular weight higher than 0.5*10⁶ g/mol.

The jacket can be applied by any technique known in the art, for example by injection moulding, powder coating or extrusion.
A preferred technique to apply the jacket is extrusion.

In a preferred method according to the present invention a number of steel ropes are provided. The number of steel ropes is preferably ranging between 2 and 20, preferably between 2 and 12, as for example 8 or 10. A jacket of a thermoplastic elastomer comprising polymer particles is applied around the steel ropes.
The steel ropes are thereby aligned parallel to the longitudinal axis of the load bearing assembly.

### Brief Description of Figures in the Drawings

The invention will now be described into more detail with reference to the accompanying drawings where
- Figure 1 is a schematic illustration of a load bearing assembly according to the present invention comprising one steel rope embedded in a jacket;
- Figure 2 is a schematic illustration of a second embodiment of a load bearing assembly according to the present invention comprising one steel rope embedded in a jacket;
- Figure 3 is a schematic illustration of a load bearing assembly according to the present invention comprising a number of parallel steel ropes;
- Figure 4 is a schematic illustration of a test system to determine the resilience of a load bearing assembly.

### Mode(s) for Carrying Out the Invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

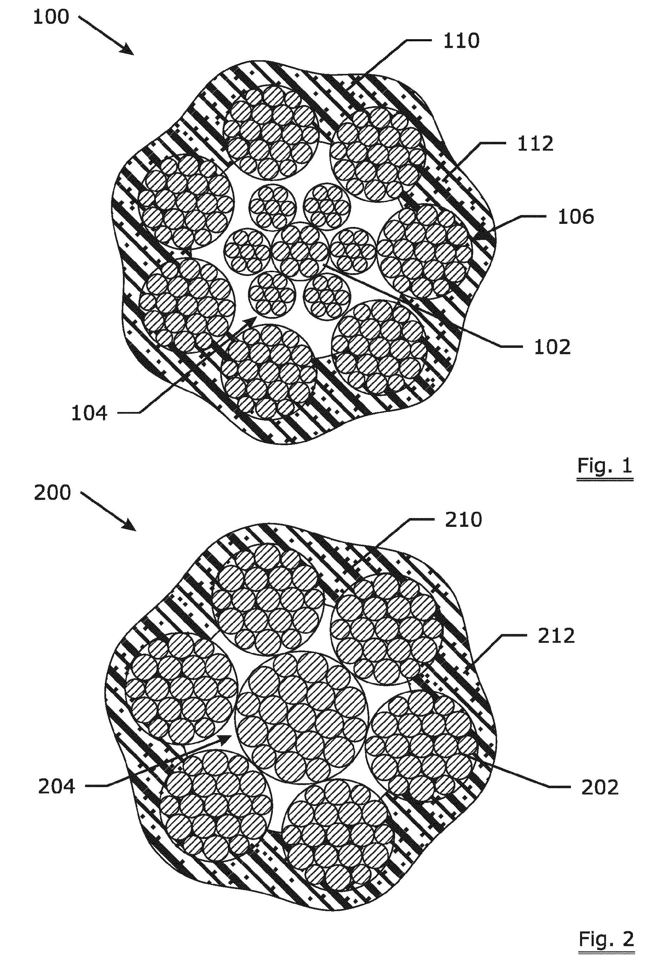

Figure 1 schematically represents a load bearing assembly 100 suitable for use in an elevator system. The load bearing assembly 100 comprises a steel rope 102 and a jacket 110. The steel rope 102 comprises for example a cord of the type 7x7+7x19W. The following rope formula describes the rope construction : ((0.34+6x0.31) + 6x (0.25+6x0.25))+ 7x (0.34+6x0.31+6x0.33/0.25).
The steel rope 102 comprises a 7x7 core strand 104 and 7 Warrington type outer strands 106 comprising 19 filaments. The Warrington type outer strands 106 are surrounding the core strand 104 with a lay length of 5 to 12 times the diameter of the bare steel rope. The 7x7 core strand 104 comprises 7 individual strands : 1+ 6 strands.
The jacket 110 comprises for example thermoplastic polyurethane. The jacket material at least partially fills the open space between the strands of the rope. In the thermoplastic polyurethane matrix polymer particles 112 having a high molecular weight are embedded. The polymer particles112 are for example ultra-high molecular weight polyethylene (UHMW-PE). The polymer particles 112 preferably have an average molecular weight of 9*10⁶ g/mol and an average particle size ranging between 20*10⁻⁶ m and 150*10⁻⁶ m.

Figure 2 shows a further embodiment of load bearing assembly 200. The load bearing assembly 200 comprises a steel rope 202 and a jacket 210. The steel rope 202 comprises for example a rope of the type 7x19W. The following rope formula describes the construction of the rope :
(0.41+6x0.41+6x0.44/0.34) + 6x(0.34+6x0.34+6x0.37/0.28).
The steel rope 202 comprised thus seven strands 204, each of these strands being a Warrington strand having 19 filaments.
The jacket 210 comprises a matrix of thermoplastic urethane and polymer particles 212 dispersed in this matrix. The polymer particles 212 comprise for example polyethylene with an average molecular weight of 5*10⁶ g/mol and an average particle size ranging between 10*10⁻⁶ m and 60*10⁻⁶m.

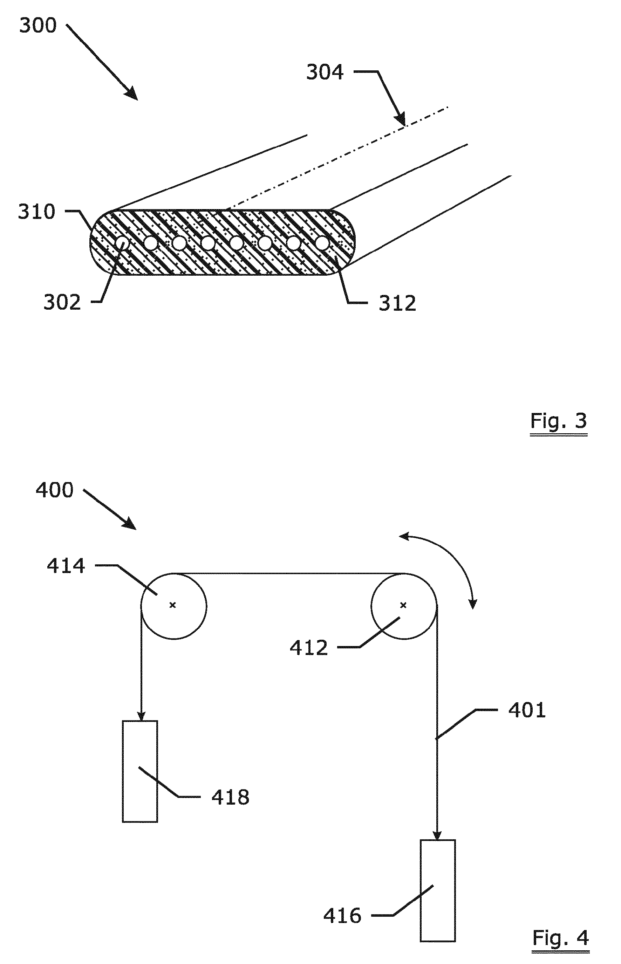

Figure 3 schematically represents a load bearing assembly 300 suitable for use in an elevator system. A plurality of steel ropes 302 are aligned substantially parallel to a longitudinal axis 304 of the load bearing assembly 300. A jacket 310 at least partially surrounds the steel ropes 302. The jacket 310 comprises for example polyurethane such as thermoplastic polyurethane. Polymer particles 312 such as UHMW-PE particles are dispersed in the thermoplastic polyurethane.

To determine the resilience of the thermoplastic elastomer under repeated bending, a number of different load bearing assemblies 401 were tested on an elevator test system 400. A schematic illustration of the test system 400 is shown in Figure 4. The test system 400 comprises one traction sheave 412 driven by an electrical motor and one additional deflection sheave 414. Both sheaves 412, 414 have round grooves with a groove radius slightly larger than the diameter of the tested load bearing assemblies 401. During fatigue testing the motor drives the load bearing assembly 401 back and forth over both traction sheave 412 and the deflection sheave 414. The ends of the tested load bearing assembly 401 are connected to weights 416, 418 keeping the load bearing assembly 401 under tensile load. The diameter D of both traction sheave 412 and deflection sheave 414 is 17.5 times the diameter d of the load bearing assembly. In the test the ratio D/d is much lower than the conventionally used ratio D/d. The ratio D/d was intentionally chosen low to test the load bearing assemblies under extreme conditions. Two different load bearing assemblies were tested :
- Sample A corresponds with the load bearing assembly described in Figure 1, a rope having a jacket comprising UHMW-PE particles in the jacket;
- Sample B corresponds with the load bearing assembly described in Figure 1, however no UHMW-PE particles are present in the jacket surrounding the steel rope.

Sample B showed cracks in the jacket after 80000 bending cycles. The polymer jacket of sample 1 showed no damages even after 450000 bending cycles.
In some examples the lifetime was increased with a factor up to 18.

To evaluate the friction characteristics of a thermoplastic elastomer, the friction coefficient (static sliding friction coefficient) of a number of samples were determined.
Friction characteristic were measured by pulling a weight with polished contact surface over the surface a polymer tape of the thermoplastic elastomer. The static sliding friction coefficient was determined from the force necessary to start moving the weight.
Three samples of thermoplastic elastomer were tested. Strips of these thermoplastic elastomers were prepared by extrusion followed by calendering.
Sample C comprises a strip of an ether-based polyurethane with Shore A hardness of 95A. In sample C no polymer particles are added to ether-based polyurethane. Sample D and sample E comprise the same polyurethane grade as sample C with 2.5 wt% and 5 wt% added UHMW-PE particles, respectively. The UHMW-PE particles have an average molecular weight of 9x10⁶ g/mol and a particle size between 20*10⁻⁶ and 150*10⁻⁶ m. An overview of the static sliding friction coefficient of the three samples is given in Table 1.

**Table 1**

| Sample | UHMW-PE particles content (wt%) | Static sliding friction coefficient |
|---|---|---|
| C | 0 | 2.8 |
| D | 2.5 | 0.50 |
| E | 5.0 | 0.37 |

From Table 1 it is clear that by adding a higher concentration of ultra-high molecular weight polyethylene particles to the thermoplastic elastomer the static friction coefficient between the polymer compound and steel is reduced.
However, the coefficient of friction in case UHMW-PE are used in a concentration of 2.5 wt% or 5 wt% remains high enough to provide enough traction for safe operation of traction elevators.

According to the present invention it is possible to adjust the coefficient of friction by modifying the content of polymer particles in the thermoplastic elastomer.
This allows to provide controlled slip between the traction sheave and the load bearing assembly during operation of the elevator for example. This is in particular advantageous to provide controlled slip between the traction sheave and the load bearing assembly when cart or counter weight are blocked at the end of their traveling path thereby preventing rope slackening and rope fracture in case the drive motor does not stop.

## Claims

1. A load bearing assembly (100, 200, 300) for use in an elevator system comprising
- at least one steel rope (102, 202, 302),
- a jacket (110, 210, 310) surrounding said at least one steel rope (102, 202, 302), said jacket (110, 210, 310) comprising at least one layer of a thermoplastic elastomer,
**characterized in that** said at least one layer of a thermoplastic elastomer comprises polymer particles (112, 212, 312), and said polymer particles (112, 212, 312)have a molecular weight higher than 0.5*10⁶ g/mol.

2. A load bearing assembly (100, 200, 300) according to claim 1, wherein said polymer particles (112, 212, 312) have a molecular weight ranging between 0.5*10⁶ g/mol and 15*10⁶ g/mol.

3. A load bearing assembly (100, 200, 300) according to claim 1 or claim 2, wherein said polymer particles (112, 212, 312) have a particle size ranging between 5*10⁻⁶ m and 250*10⁻⁶ m.

4. A load bearing assembly (100, 200, 300) according to any one of the preceding claims, wherein said polymer particles (112, 212, 312) comprise polyethylene particles or siloxane particles.

5. A load bearing assembly (100, 200, 300) according to any one of the preceding claims, wherein said thermoplastic elastomer is selected from the group consisting of styrenic block copolymers, polyether-ester block copolymers, thermoplastic polyolefin elastomers, thermoplastic polyurethanes and polyether polyamide block copolymers.

6. A load bearing assembly (100, 200, 300) according to any one of the preceding claims, wherein said rope (102, 202, 302) comprises a number of strands twisted together, said strands comprising steel filaments.

7. A load bearing assembly (100, 200, 300) according to any one of the preceding claims, wherein said load bearing assembly (100, 200, 300) comprises one rope surrounded by said jacket (110, 210, 310).

8. A load bearing assembly (100, 200, 300) according to any one of claims 1 to 6, wherein said load bearing assembly (100, 200, 300) comprises at least two steel ropes (102, 202, 302), said at least two steel ropes being aligned parallel to the longitudinal axis of said load bearing assembly (100, 200, 300).

9. A method of making a load bearing assembly (100, 200, 300) as defined in any one of claims 1 to 8, said method comprising the steps of
- providing at least one steel rope (102, 202, 302);
- applying a jacket (110, 210, 310) of a thermoplastic elastomer around said at least one steel rope (102, 202, 302),
**characterized in that** said thermoplastic elastomer comprises polymer particles (112, 212, 312) having a molecular weight higher than 0.5*10⁶ g/mol.

10. A method according to claim 9, wherein a number of steel ropes (102, 202, 302) ranging between 2 and 20 is provided and wherein a jacket (110, 210, 310) of a thermoplastic elastomer comprising polymer particles (112, 212, 312) is applied around said steel ropes (102, 202, 302).

## Patentansprüche

1. Lasttrageanordnung (100, 200, 300) zur Verwendung in einem Aufzugsystem, die Folgendes umfasst:
- mindestens ein Stahlseil (102, 202, 302),
- einen Mantel (110, 210, 310), der das mindestens eine Stahlseil (102, 202, 302) umgibt, wobei der Mantel (110, 210, 310) mindestens eine Schicht eines thermoplastischen Elastomers aufweist,
**dadurch gekennzeichnet, dass** die mindestens eine Schicht eines thermoplastischen Elastomers Polymerteilchen (112, 212, 312) aufweist und die Polymerteilchen (112, 212, 312) ein Molekulargewicht von mehr als 0,5*10⁶ g/mol aufweisen.

2. Lasttrageanordnung (100, 200, 300) nach Anspruch 1, wobei die Polymerteilchen (112, 212, 312) ein Molekulargewicht aufweisen, das zwischen 0,5*10⁶ g/mol und 15*10⁶ g/mol liegt.

3. Lasttrageanordnung (100, 200, 300) nach Anspruch 1 oder 2, wobei die Polymerteilchen (112, 212, 312) eine Teilchengröße aufweisen, die zwischen 5*10⁻⁶ m und 250*10⁻⁶ m liegt.

4. Lasttrageanordnung (100, 200, 300) nach einem der vorhergehenden Ansprüche, wobei die Polymerteilchen (112, 212, 312) Polyethylenteilchen oder Siloxanteilchen aufweisen.

5. Lasttrageanordnung (100, 200, 300) nach einem der vorhergehenden Ansprüche, wobei das thermoplastische Elastomer aus der Gruppe ausgewählt ist, die aus Styrolblockcopolymeren, Polyetheresterblockcopolymeren, thermoplastischen Polyolefinelastomeren, thermoplastischen Polyurethanen und Polyetherpolyamidblockcopolymeren besteht.

6. Lasttrageanordnung (100, 200, 300) nach einem der vorhergehenden Ansprüche, wobei das Seil (102, 202, 302) eine Anzahl von Litzen aufweist, die miteinander verdrillt sind, wobei die Litzen Stahlfilamente aufweisen.

7. Lasttrageanordnung (100, 200, 300) nach einem der vorhergehenden Ansprüche, wobei die Lasttrageanordnung (100, 200, 300) ein durch den Mantel (110, 210, 310) umgebenes Seil aufweist.

8. Lasttrageanordnung (100, 200, 300) nach einem der Ansprüche 1 bis 6, wobei die Lasttrageanordnung (100, 200, 300) mindestens zwei Stahlseile (102, 202, 302) aufweist, wobei die mindestens zwei Stahlseile parallel zur Längsachse der Lasttrageanordnung (100, 200, 300) ausgerichtet sind.

9. Verfahren zum Herstellen einer Lasttrageanordnung (100, 200, 300) nach einem der Ansprüche 1 bis 8, wobei das Verfahren die folgenden Schritte aufweist:
- Bereitstellen von mindestens einem Stahlseil (102, 202, 302);
- Aufbringen eines Mantels (110, 210, 310) eines thermoplastischen Elastomers um das mindestens eine Stahlseil (102, 202, 302),
**dadurch gekennzeichnet, dass** das thermoplastische Elastomer Polymerteilchen (112, 212, 312) aufweist, die ein Molekulargewicht von mehr als 0,5*10⁶ g/mol aufweisen.

10. Verfahren nach Anspruch 9, wobei eine Anzahl von Stahlseilen (102, 202, 302) vorgesehen ist, die zwischen 2 und 20 liegt, und wobei ein Mantel (110, 210, 310) eines thermoplastischen Elastomers, das Polymerteilchen (112, 212, 312) aufweist, um die Stahlseile (102, 202, 302) auf gebracht wird.

## Revendications

1. Ensemble porteur (100, 200, 300) destiné à être utilisé dans un système d'ascenseur comprenant
- au moins un câble d'acier (102, 202, 302),
- une gaine (110, 210, 310) entourant ledit au moins un câble d'acier (102, 202, 302), ladite gaine (110, 210, 310) comprenant au moins une couche d'un élastomère thermoplastique,
**caractérisé en ce que** ladite au moins une couche d'un élastomère thermoplastique comprend des particules de polymère (112, 212, 312) et lesdites particules de polymère (112, 212, 312) ont une masse moléculaire supérieure à 0,5 x 10⁶ g/mol.

2. Ensemble porteur (100, 200, 300) selon la revendication 1, dans lequel lesdites particules de polymère (112, 212, 312) ont une masse moléculaire comprise entre 0,5 x 10⁶ g/mol et 15 x 10⁶ g/mol.

3. Ensemble porteur (100, 200, 300) selon la revendication 1 ou la revendication 2, dans lequel lesdites particules de polymère (112, 212, 312) ont une taille de particule comprise entre 5 x 10⁻⁶ m et 250 x 10⁻⁶ m.

4. Ensemble porteur (100, 200, 300) selon l'une quelconque des revendications précédentes, dans lequel lesdites particules de polymère (112, 212, 312) comprennent des particules de polyéthylène ou des particules de siloxane.

5. Ensemble porteur (100, 200, 300) selon l'une quelconque des revendications précédentes, dans lequel ledit élastomère thermoplastique est choisi dans le groupe constitué par les copolymères séquencés styréniques, les copolymères séquencés polyéther-esters, les élastomères de polyoléfines thermoplastiques, les polyuréthanes thermoplastiques et les copolymères séquencés polyéther-polyamides.

6. Ensemble porteur (100, 200, 300) selon l'une quelconque des revendications précédentes, dans lequel ledit câble (102, 202, 302) comprend un certain nombre de torons torsadés les uns avec les autres, lesdits torons comprenant des filaments d'acier.

7. Ensemble porteur (100, 200, 300) selon l'une quelconque des revendications précédentes, ledit ensemble porteur (100, 200, 300) comprenant un câble entouré de ladite gaine (110, 210, 310).

8. Ensemble porteur (100, 200, 300) selon l'une quelconque des revendications 1 à 6, ledit ensemble porteur (100, 200, 300) comprenant au moins deux câbles d'acier (102, 202, 302), lesdits au moins deux câbles d'acier étant alignés parallèlement à l'axe longitudinal dudit ensemble porteur (100, 200, 300).

9. Procédé de fabrication d'un ensemble porteur (100, 200, 300) tel que défini dans l'une quelconque des revendications 1 à 8, ledit procédé comprenant les étapes consistant à
- fournir au moins un câble d'acier (102, 202, 302) ;
- appliquer une gaine (110, 210, 310) d'un élastomère thermoplastique autour dudit au moins un câble d'acier (102, 202, 302),
**caractérisé en ce que** ledit élastomère thermoplastique comprend des particules de polymère (112, 212, 312) ayant une masse moléculaire supérieure à 0,5 x 10⁶ g/mol.

10. Procédé selon la revendication 9, dans lequel un nombre de câbles d'acier (102, 202, 302) compris entre 2 et 20 est fourni et dans lequel une gaine (110, 210, 310) d'un élastomère thermoplastique comprenant des particules de polymère (112, 212, 312) est appliquée autour desdits câbles d'acier (102, 202, 302).
